# EUROPEAN PATENT SPECIFICATION

(11) **EP 1 947 243 B1**
(45) Date of publication and mention of the grant of the patent: **02.06.2010**
(21) Application number: 08000830.3
(22) Date of filing: 17.01.2008
(51) Int. Cl.: E01C 9/00, E01C 5/00, E03F 1/00

(54) **Paving**
Belag
Revêtement

(30) Priority: 18.01.2007 BE 200700017
(43) Date of publication of application: 23.07.2008
(73) Proprietor: Verbruggen, Robert, 2870 Puurs (BE)
(72) Inventor: Verbruggen, Robert, 2870 Puurs (BE)
(74) Representative: Donné, Eddy

(56) References cited:
- EP-A- 1 533 428
- DE-A1- 2 551 599
- DE-A1- 4 428 482

## Description

The present invention concerns a pavement, in particular a pavement formed of paving stones or clinkers that are similar in shape and that are provided according to a certain pattern on a consolidated foundation to be applied in streets, squares, parking places and the like.

DE 2 551 599 A1 discloses a pavement according to the preamble of claim 1.

It is known that, in order to lay such a pavement, use is usually made of massive paving stones, clinkers or cobblestones.

A disadvantage of such known pavements is that they let the water seep through but slowly, such that there is a risk of floods in case of heavy rainfall when the available vacant surface is too small.

This disadvantage is remedied nowadays by using concrete products with an open structure for drives or the like, whereby the concrete forms a honeycomb structure with large openings in between.

A disadvantage of these pavements is that they are difficult to walk on, in particular with heels that get caught in the openings.

Another disadvantage of these pavements is that the open structure can silt up quickly, as a result of which the porous character of the product is lost.

Yet another disadvantage of the above-mentioned pavements is that they cannot be applied in company grounds where chemicals or oils are processed or conveyed, since these substances cannot be collected should they be spilled or in case of a leak, but infiltrate directly in the bottom.

Pavements are already known whereby special drain paving stones are applied having one or several horizontal ducts which are positioned in one another's prolongation while the pavement is being laid so as to form continuous drain ducts via which the rain water can quickly flow off via vertical grooves in the paving stone to brooks, sewers, surge basins or the like.

Such paving stones are usually only applied to form a drain duct along the side edges of the pavement, although applications are also known in which the entire pavement is laid with such paving stones so as to form parallel drain ducts for an even faster drainage and drain of the rain water.

A disadvantage of such pavements is that the rain water is lead off via brooks and sewer systems, which has a negative effect on the groundwater level on the site of the pavement.

Another disadvantage is that the rain water is mixed with the waste water in the sewer systems and brooks in this way, as a result of which waste water treatment installations with a larger capacity will be required than if the rain water was not mixed with the waste water.

Another disadvantage is that with such pavements, harmful liquids such as oils and the like which might be accidentally spilled can also spread quickly via the sewer systems and brooks.

Yet another disadvantage is that the drain ducts in the paving stones are difficult to clean.

The present invention aims to remedy one or several of the above-mentioned and other disadvantages.

To this end, the invention concerns a pavement formed of paving stones or clinkers that are similar in shape having an upper surface that is designed to step on, an undersurface and side surfaces extending between the upper surface and undersurface, characterised in that the paving stones are provided with at least one cavity in the shape of a passage between opposite side surfaces, whereby in at least one of the above-mentioned opposite side surfaces has been provided a first recess so as to form a duct which connects the passage to the upper surface of the paving stone, and a second recess has been provided in at least one of the above-mentioned opposite side surfaces so as to form a duct which connects the passage to the undersurface of the paving stone, and whereby the paving stones of the pavement are arranged in such a pattern that the cavity-forming passages are predominantly sealed by adjacent paving stones on one or on both far ends in the axial direction of the passages.

An advantage of a pavement according to the invention is that it has a certain water storage capacity in the sealed cavities of the paving stones, such that the water is locally and temporarily retained, and as a result of which, in case of heavy rainfall, more water can be stored before the water level rises above ground level. In other words, a pavement according to the invention may serve as a buffer in case of heavy rainfall or as a buffer to collect oil or any other substances that end up on the paving stones.

Another advantage is that the recesses in the side surface and the upper surface can be selected relatively small, such that the upper surface is easy to walk on, even with stiletto heels.

Another advantage is that chemicals or oils ending up on the paving stones cannot immediately infiltrate in the bottom, but are collected in the cavity, where they can be processed by adding an appropriate substance.

Another advantage is that the paving stones are easy to manufacture, for example as moulded bricks made by means of an appropriate mould.

According to a preferred embodiment, a recess is provided in a side surface of the paving stone at or near at least one vertical angular edge of the paving stone over a certain height of the paving stone, whereby this recess forms a little duct in the pavement between the upper surface of the pavement and a cavity-forming passage of an adjacent paving stone.

An advantage thereof is that the cavities in the paving stones are easy to clean, for example by making use of a high-pressure cleaner with which, by means of a high-pressure jet, one can squirt in the cavities of the paving stones via the little ducts which provide access to said cavities as of the upper surface of the pavement, such that dirt which is heaped up in the cavities can be sprayed away via the recesses in the side surfaces at the passages in the paving stones.

According to a preferred embodiment, means can be provided in the cavities in the paving stones of the pavement which make it possible to disintegrate hydrocarbons.

This makes the pavement particularly suitable for company grounds where oil or the like is being processed or conveyed. Indeed, oil that accidentally ends up on the paving stones will flow through the passage in the upper surface to the cavity, where the oil is disintegrated before the residue seeps into the bottom via the passage in the undersurface.

The above-mentioned means may be formed of a holder in which a suspension of micro-organisms has been provided which makes it possible to disintegrate hydrocarbons. The holder is hereby preferably a spongelike substance or any other absorbing or liquid-retaining material in which a suspension of for example bacteria has been absorbed.

In order to better explain the characteristics of the present invention, the following preferred embodiment of a paving stone that can be applied in a pavement according to the invention will be described as an example only without being limitative in any way, with reference to the accompanying drawings, in which:
figure 1 shows a view in perspective of a paving stone that can be applied in a pavement according to the invention;
figure 2 represents a section according to line II-II in figure 1;
figure 3 shows a top view of the part of a surface of a pavement according to the invention laid with paving stones according to figure 1, to a smaller scale;
figure 4 shows a variant of a paving stone according to figure 1;
figure 5 shows a view according to arrow F5 in figure 4;
figure 6 shows a top view as in figure 3, but for a pavement with paving stones according to figure 4;
figure 7 represents a section according to line VII-VII in figure 6;
figure 8 represents a view as in figure 6, with the same paving stones, but laid in another pattern;
figure 9 represents a section according to line IX-IX in figure 8;
figures 10 and 11 are views analogous to those of figures 4 and 5, but for another form of paving stones;

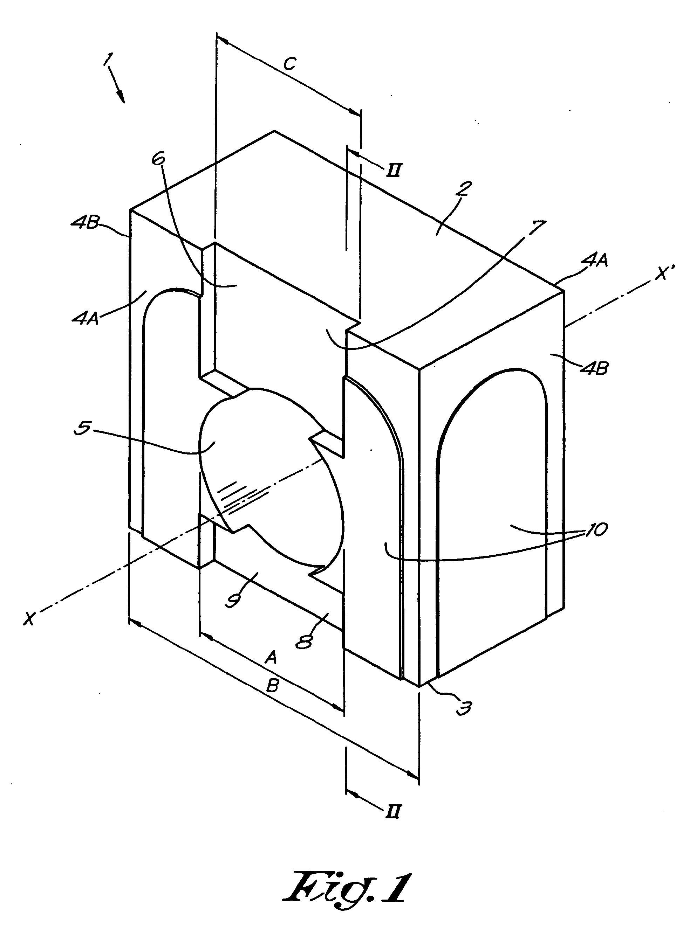

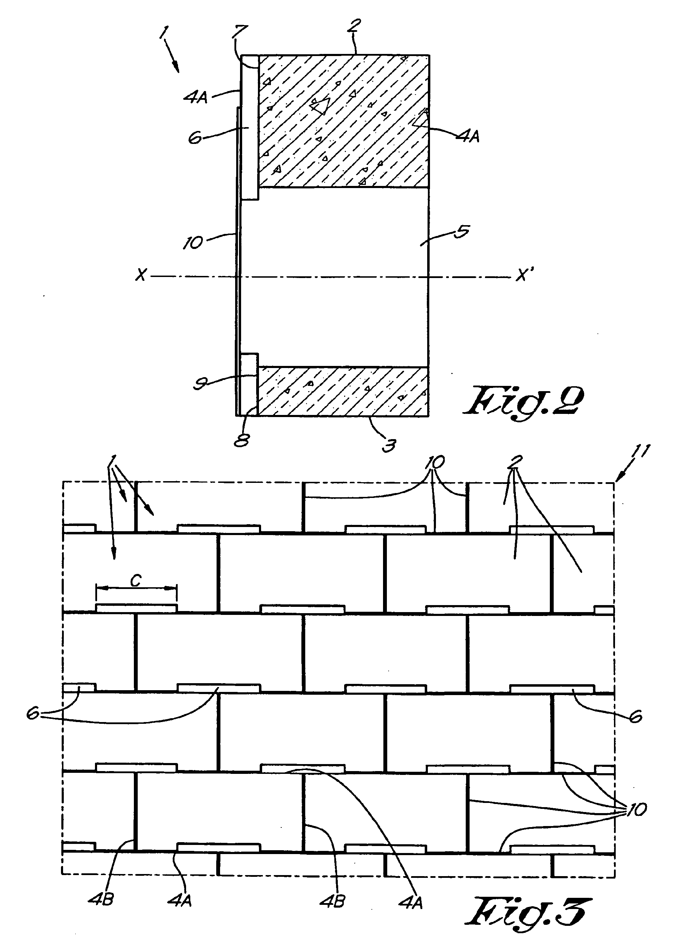

Figures 1 and 2 represent a paving stone 1 to be applied in a pavement according to the invention, with a surface 2 forming the face of the paving stone to step on and which will be further indicated here as the upper surface, an undersurface 3 situated opposite the upper surface 2 which rests on the foundation of the pavement, and side surfaces 4A, 4B extending between the upper surface and undersurface 2-3.

In this case, the paving stone 1 has a face to step on and an undersurface 3 with a rectangular contour, such that there are two pairs of opposite side surfaces 4A and 4B.

In the paving stone 1 has been provided a cavity which, in this case, extends as a passage 5 through the paving stone 1 between opposite side surfaces 4A.

In one of the above-mentioned side surfaces 4A is provided a first duct 6 at the passage 5 which connects the upper surface 2 to the cavity-forming passage 5 and which, in the given embodiment, is formed of a recess 7 in the 4A concerned.

Preferably, a second duct 8 is provided in the same or in the opposite side surface 4A which connects the undersurface 3 to the passage 5, whereby this duct is in this case formed of a recess 9 in the prolongation of the recess 7 of the first duct 6 and thus in the same side surface 4A as the first duct 6.

In case the cavity 5 extends between two side surfaces 4A through the paving stone 1, the width A of this passage 5 will be preferably smaller than or equal to half the width B of the side surfaces 4A concerned.

The width C of the above-mentioned recesses 7, 9 is preferably smaller than or equal to the width A of the cavity 5.

Optionally, the paving stone 1, which is preferably made of concrete, may be provided with spacer sleeves 10 which as is known are formed of a thickening of the side surfaces 4A, 4B with a restricted thickness of usually 0.5 to 2 mm.

This thickening 10 may be provided on different side surfaces 4A, 4B of the paving stone 1.

Figure 3 represents the surface of a pavement 11 according to the invention, which pavement 11 is laid with paving stones 1 that are similar in shape, as described above, whereby the paving stones 1 are arranged in such a pattern that the cavity-forming passages 5 are predominantly sealed by adjacent paving stones 1 on one or both far ends in the axial direction X-X' of the cavity-forming passages 5.

In this case, the different paving stones 1 are arranged with their side surfaces 4B opposite one another in parallel, adjacent rows, whereby the rows are each time shifted over half a paving stone in relation to one another so as to obtain a cross-laid pattern.

As the cavities 5 in the paving stones 1 extend over less than half the width B of these paving stones and are provided centrally in the side surfaces 4A, every cavity-forming passage 5 is predominantly confined by the side surfaces 4A of two neighbouring paving stones in the axial direction, at both far ends.

In this way are formed cavities that are practically entirely sealed, whereby each cavity 5 is isolated in relation to the other cavities, in other words the cavity 5 of one paving stone 1 is not connected to the cavity 5 in one of the neighbouring paving stones 1. The aim of keeping the cavities 5 separate in the different neighbouring paving stones 1 is to prevent that one cavity 5 would be emptied to the advantage of other cavities 5.

The ducts 6, 8 are not connected either, but they are each confined by the side edges of the recesses 7, 9 and the side surfaces 4A of two neighbouring paving stones 1, whereby each time one duct is formed per paving stone 1 from the upper surface 2 to the respective cavity 5, and one duct from this cavity 5 to the undersurface 3.

In case of rainfall, the rain water can flow off via the ducts 6 to the cavities 5 in which the water can be locally and temporarily retained, such that the water can flow off slowly via the ducts 8 to the bottom or foundation of the pavement.

In the different cavities 5 can be provided means for disintegrating hydrocarbons, such as oils. These means may consist among others of a suspension of micro-organisms such as bacteria. Thanks to the total storage capacity of the cavities, the water to be treated can be kept sufficiently long in the cavities so as to let the above-mentioned means do their job. In this case, the ducts 8 towards the bottom can be made small with a positive effect.

In order to retain the micro-organisms in a cavity 5, a sponge-like material is preferably provided in the latter.

The micro-organisms can be provided in the cavity 5 in a simple manner by pouring or spraying a suspension of these micro-organisms over the paving stone 1, as a result of which the suspension will flow through the passage 6 in the upper surface 2 towards the cavity 5 and will be absorbed in the sponge-like material.

Micro-organisms which make it possible to disintegrate hydrocarbons are generally known and are already being applied at present to remove oil from company premises by providing a suspension of these organisms over oil stains.

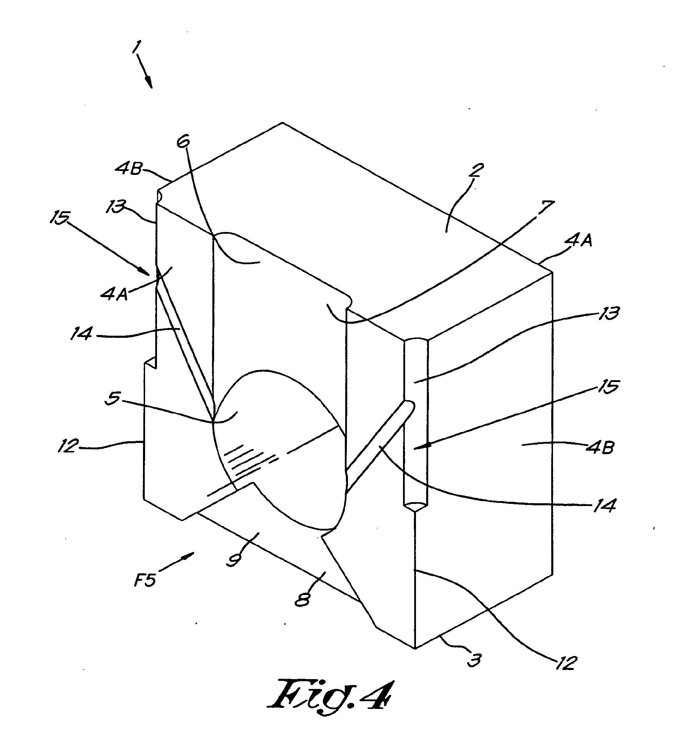

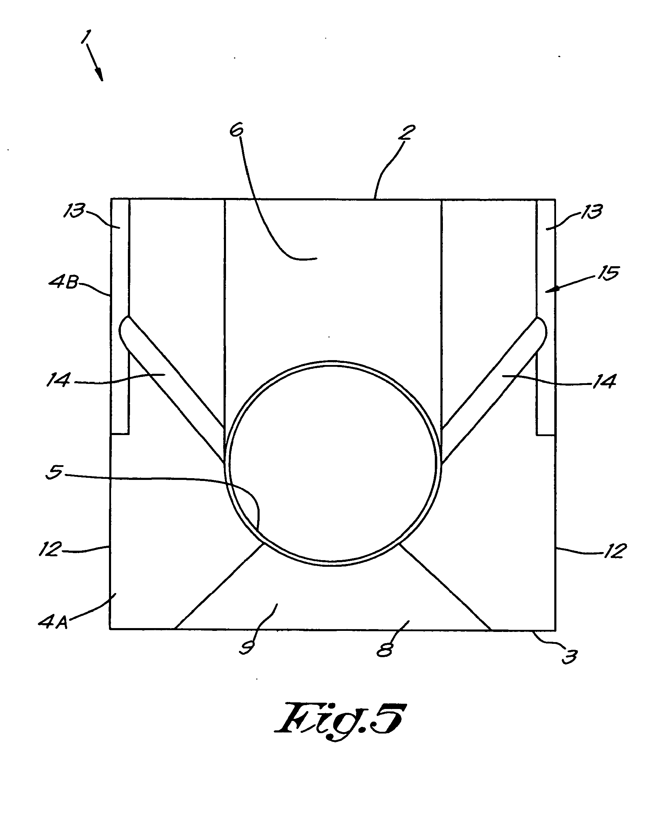

Figures 4 and 5 represent a variant of a paving stone 1 which differs from the preceding embodiment in that no spacer sleeves 10 are provided and in that a recess 13 is provided at the top in the side surface 4A with recesses 7-9 at or near one or two vertical angular edges 12 of the stone 1 over a certain height of the paving stone 1, in such a manner that the recess continues from the upper surface 2 up to a level corresponding to the height of the passage 5.

Moreover, in the above-mentioned side surface 4A which is provided with recesses 7-9 are provided one or several grooves 14 which continue preferably slantingly up to an angular edge 12 of the paving stone 1, for example into the vertical recesses 13, whereby these grooves 14 run preferably slantingly in relation to the upper surface 2 of the stone and preferably run slantingly upward as of the passage 5.

Further, this paving stone 1 differs from the preceding embodiment in that the recess 9 which connects the passage 5 to the bottom side 3 widens in a conical manner towards the bottom.

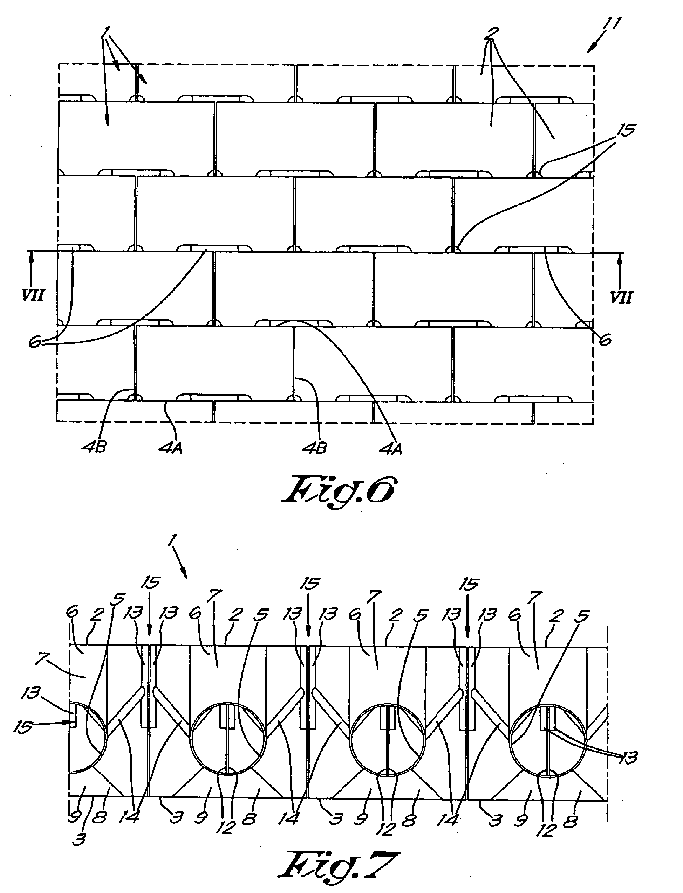

Figures 6 and 7 represent a pavement 11 laid with paving stones 1 of the last described type of figures 4 and 5, whereby one and the same laying pattern has been applied as in figure 3.

In these figures, it is clear that, thanks to the pattern, the passages 5 are sealed on either side in the axial direction by adjacent paving stones 1 of an adjacent row of paving stones so as to isolate the passages 5 from one another.

The individual passages 5 are connected to the upper surface of the pavement 11 via the ducts 6 and via the vertical recesses 13 of the adjacent paving stones 11 which form a little duct which continues as of the upper surface of the pavement 11 into the cavity-forming passages 5.

In this way, dirt which may accumulate in the cavities 5 can be easily removed by blowing out the cavities 5 via the above-mentioned little ducts 15 with a high-pressure cleaner or the like, whereby the accumulated dirt is then blown out via the ducts 6.

Further, these ducts 6 and 15 make it possible to clean or rinse out the sponge or means that may be present in the cavities 5 to disintegrate any dirt.

It is clear that little ducts 15 can also be obtained if only one single angular edge 12 of the paving stones 1 is provided with a recess 13 so as to form little ducts 15, that this recess 13 must not necessarily be provided at the angular edge 12, but might just as well be provided near such an angular edge 12.

As is clear in figure 7, the grooves 15 form communicating ducts between the cavity-forming passages 5 of neighbouring paving stones 1, such that, as soon as there is a threat of saturation, an individually saturated paving stone 1 will automatically make the excess water flow to non-saturated surrounding paving stones 1.

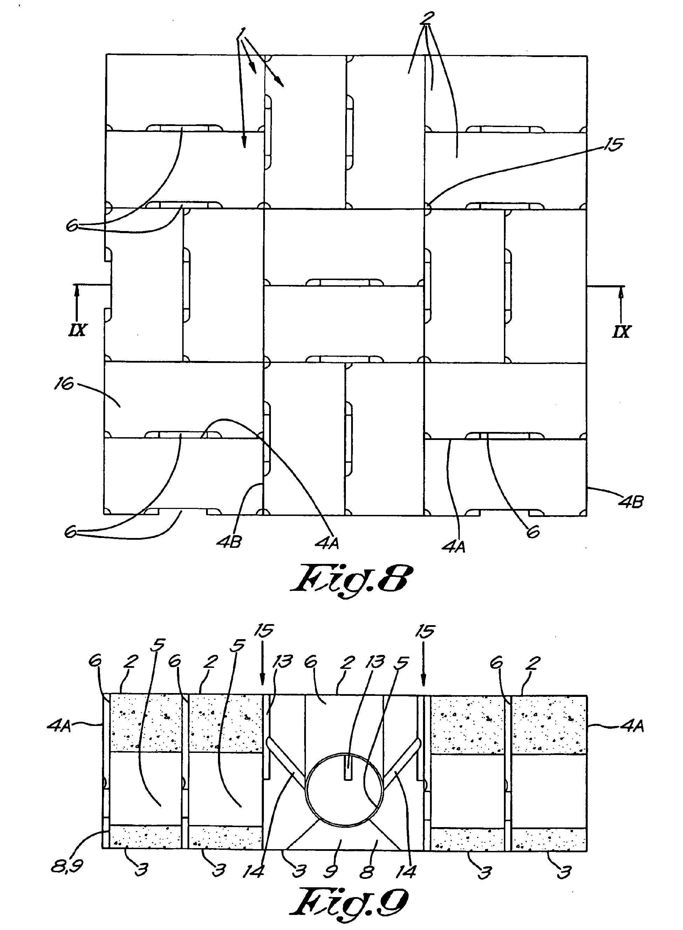

Figures 8 and 9 show a variant of a pavement 11 according to the invention which has also been laid with paving stones 1 of the type in figure 4, such as in the pavement 11 of figure 6, but whereby another pattern has been applied in this case whereby the paving stones 1 are arranged two by two against each other, with their passages 5 in one another's prolongation, and whereby these pairs of paving stones 1 are chequered, whereby the passages of adjacent pairs of paving stones 1 are directed diagonally in relation to one another.

In this way are created isolated cavities of two passages 5 situated in each other's prolongation, sealed on either side by the paving stones 1 of an adjacent pair of paving stones, and which are connected to the surface of the pavement via the ducts 6 and 15.

Naturally, it is indicated in this case to use paving stones 1 with a rectangular contour whose width is half the length.

Other shapes of stones and patterns or combinations of shapes and patterns are not excluded, of course.

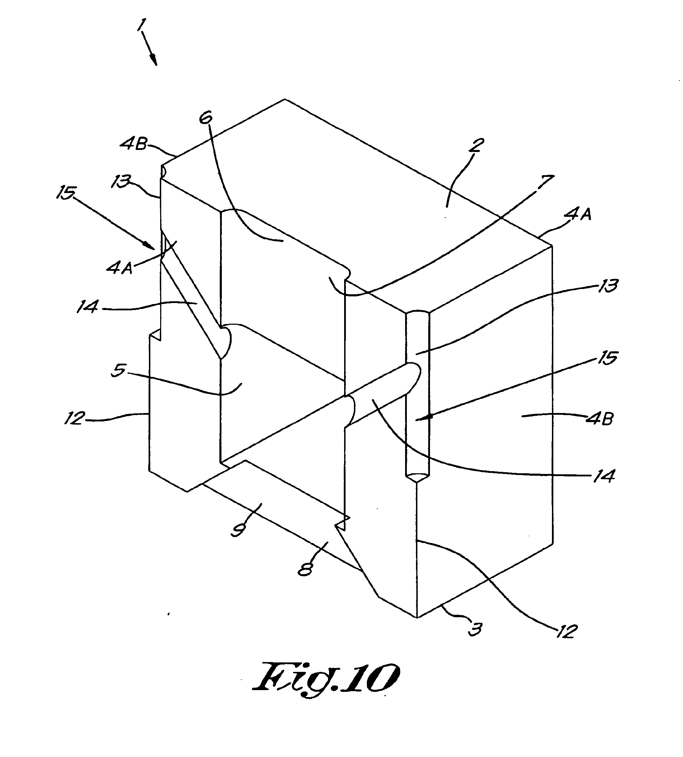

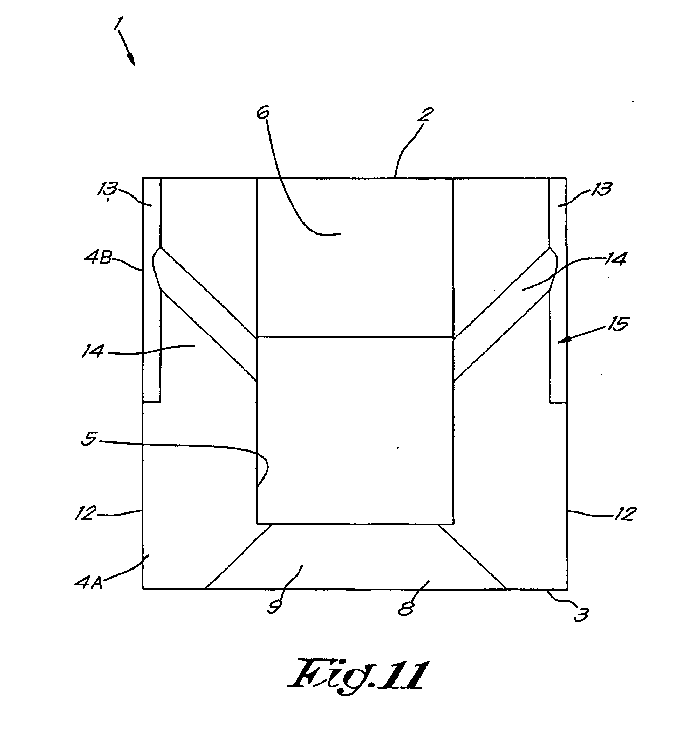

Another example of a possible shape of paving stones is represented in figures 10 and 11.

The shape of the figures 10 and 11 differs from the preceding one in that the passage 5 is in this case rectangular instead of round, and in that the grooves 14 are situated higher.

The present invention is by no means restricted to the embodiment described above and represented in the accompanying drawings; on the contrary, such a paving stone that can be applied in a pavement according to the invention can be made according to many different variants while still remaining within the scope of the invention as defined by the claims.

## Claims

1. Pavement formed of paving stones or clinkers (1) that are similar in shape having an upper surface (2) that is designed to step on, an undersurface (3) and side surfaces (4A,4B) extending between the upper surface and undersurface (2-3), **characterised in that** the paving stones (1) are provided with at least one cavity in the shape of a passage (5) between opposite side surfaces (4A), whereby in at least one of the above-mentioned opposite side surfaces is provided a first recess (7) so as to form a duct (6) which connects the aforesaid passage (5) to the upper surface (2) of the paving stone (1), and **characterised in that** a second recess (9) is provided in at least one of the above-mentioned opposite side surfaces (4A) so as to form a duct (8) which connects the passage (5) to the undersurface (3) of the paving stone (1), and whereby the paving stones (1) of the pavement (11) are arranged in such a pattern that the cavity-forming passages (5) are predominantly sealed by adjacent paving stones (1) on one or on both far ends in the axial direction (X-X') of the passages.

2. Pavement according to claim 1, **characterised in that** in the above-mentioned cavity-forming passages (5) is provided a liquid-absorbing or liquid-retaining material, for example a sponge-like material.

3. Pavement according to claim 1 or 2, **characterised in that** in the above-mentioned cavity-forming passages (5) are provided means which make it possible to disintegrate hydrocarbons.

4. Pavement according to claim 3, **characterised in that** the above-mentioned means consist of a suspension of microorganisms.

5. Pavement according to any one of the preceding claims, **characterised in that** the cavity-forming passages (5) of the paving stones (1) have a width (A) which is smaller than or equal to half the width (B) of the side surfaces (4A) through which the passages (5) extend, such that, when several paving stones (1) are placed with their corresponding side surfaces (4A, 4B) next to one another, the cavities (5) in the different paving stones (1) can be separated from one another.

6. Pavement according to any one of the preceding claims, **characterised in that** the recesses (7) in the side surfaces (4A) of the paving stones (1° have a width (C) which is smaller than or equal to the width (A) of the cavity-forming passages (5), such that, when different paving stones (1) are placed next to one another, a duct (6) can each time be formed between the side surfaces of the recesses (7) concerned and a side surface (4A) of a neighbouring paving stone.

7. Pavement according to any one of the preceding claims, **characterised in that** the paving stones (1) are arranged next to one another in parallel rows and with their passages (5) directed diagonally to the direction of the rows, whereby adjacent rows are shifted in relation to one another, for example over half the width of the paving stones.

8. Pavement according to any one of claims 1 to 6, **characterised in that** the paving stones (1) are arranged two by two against each other with their passages (5) situated in one another's prolongation, and **in that** these pairs of paving stones (1) are chequered, whereby the passages of adjacent pairs of paving stones (1) are directed diagonally in relation to one another.

9. Pavement according to any one of the preceding claims, **characterised in that** the paving stones at or near at least one of the angular edges (12) of the paving stones (1) are provided with a recess (13) over a certain height which, together with adjacent paving stones (1) form a little duct which connects the surface of the pavement to a cavity-forming passage of one of the paving stones.

10. Pavement according to any one of the preceding claims, **characterised in that** the paving stones are provided with grooves (14) which connect the cavity-forming passages (5) to an angular edge (12) of the paving stones, and preferably connect these passages to an aforesaid recess (13) at such an angular edge (12).

11. Pavement according to claim 10, **characterised in that** the grooves (14) are provided in the side surface (4A) of the paving stones (1) in which the recess (7) is provided, and **in that** these grooves are directed slantingly in relation to the upper surface (2) of the paving stones (1).

12. Pavement according to any one of the preceding claims, **characterised in that** the paving stones (1) are made of concrete.

## Patentansprüche

1. Pflaster, gebildet aus Pflastersteinen oder Klinkern (1), die von gleichartiger Form sind, mit einer Oberseite (2), die als Trittfläche gedacht ist, einer Unterseite (3) und Seitenflächen (4A, 4B), die sich zwischen der Ober- und der Unterseite (2-3) erstrecken, **dadurch gekennzeichnet, dass** die Pflastersteine (1) mit mindestens einem Hohlraum in Form eines Durchgangs (5) zwischen gegenüberliegenden Seitenflächen (4A) versehen sind, wobei in mindestens einer der vorgenannten gegenüberliegenden Seitenflächen eine erste Aussparung (7) vorgesehen ist, um einen Kanal (6) zu bilden, der den vorgenannten Durchgang (5) mit der Oberseite (2) des Pflastersteins (1) verbindet, und **dadurch gekennzeichnet, dass** eine zweite Aussparung (9) in mindestens einer der vorgenannten gegenüberliegenden Seitenflächen (4A) vorgesehen ist, um einen Kanal (8) zu bilden, der den Durchgang (5) mit der Unterseite (3) des Pflastersteins (1) verbindet, und wobei die Pflastersteine (1) des Pflasters (11) in einem solchen Muster angeordnet sind, dass die hohlraumbildenden Durchgänge (5) an einem oder an beiden Enden in der axialen Richtung (X-X') der Durchgänge durch benachbarte Pflastersteine (1) überwiegend verschlossen werden.

2. Pflaster nach Anspruch 1, **dadurch gekennzeichnet, dass** in den vorgenannten hohlraumbildenden Durchgängen (5) ein flüssigkeitsabsorbierendes oder flüssigkeitsrückhaltendes Material, beispielsweise ein schwammartiges Material, vorgesehen ist.

3. Pflaster nach Anspruch 1 oder 2, **dadurch gekennzeichnet, dass** in den vorgenannten hohlraumbildenden Durchgängen (5) Mittel vorgesehen sind, die es ermöglichen, Kohlenwasserstoffe abzubauen.

4. Pflaster nach Anspruch 3, **dadurch gekennzeichnet, dass** die vorgenannten Mittel aus einer Suspension von Mikroorganismen bestehen.

5. Pflaster nach einem der vorgenannten Ansprüche, **dadurch gekennzeichnet, dass** die hohlraumbildenden Durchgänge (5) der Pflastersteine (1) eine Breite (A) aufweisen, die kleiner als oder gleich der Hälfte der Breite (B) der Seitenflächen (4A) ist, durch die sich die Hohlräume (5) erstrecken, sodass, wenn mehrere Pflastersteine (1) mit ihren entsprechenden Seitenflächen (4A, 4B) gegeneinander plaziert werden, die Hohlräume (5) in den verschiedenen Pflastersteinen (1) voneinander getrennt sein können.

6. Pflaster nach einem der vorgenannten Ansprüche, **dadurch gekennzeichnet, dass** die Aussparungen (7) in den Seitenflächen (4A) der Pflastersteine (1) eine Breite (C) aufweisen, die kleiner als die oder gleich der Breite (A) der hohlraumbildenden Durchgänge (5) ist, sodass, wenn verschiedene Pflastersteine (1) nebeneinander plaziert werden, jeweils ein Kanal (6) zwischen den Seitenflächen der betreffenden Aussparungen (7) und einer Seitenfläche (4A) eines benachbarten Pflastersteins gebildet werden kann.

7. Pflaster nach einem der vorgenannten Ansprüche, **dadurch gekennzeichnet, dass** die Pflastersteine (1) nebeneinander in parallelen Reihen und mit ihren Durchgängen (5) quer zur Richtung der Reihen gerichtet angeordnet sind, wobei benachbarte Reihen in Bezug zueinander versetzt sind, beispielsweise über die halbe Breite der Pflastersteine.

8. Pflaster nach einem der Ansprüche 1 bis 6, **dadurch gekennzeichnet, dass** die Pflastersteine (1) zwei zu zwei gegeneinander angeordnet sind, wobei ihre Durchgänge (5) sich in ihrer gegenseitigen Verlängerung befinden, und dass diese Paare von Pflastersteinen (1) schachbrettartig angeordnet sind, wobei die Durchgänge benachbarter Paare von Pflastersteinen (1) in Bezug zueinander quer gerichtet sind.

9. Pflaster nach einem der vorgenannten Ansprüche, **dadurch gekennzeichnet, dass** die Pflastersteine an oder in Nähe mindestens einer der Eckränder (12) der Pflastersteine (1) mit einer Aussparung (13) über eine gewisse Höhe versehen sind, die, zusammen mit benachbarten Pflastersteinen (1), einen kleinen Kanal bilden, der die Oberfläche des Pflasters mit einem hohlraumbildenden Durchgang eines der Pflastersteine verbindet.

10. Pflaster nach einem der vorgenannten Ansprüche, **dadurch gekennzeichnet dass** die Pflastersteine mit Rillen (14) versehen sind, welche die hohlraumbildenden Durchgänge (5) mit einem Eckrand (12) der Pflastersteine verbinden und bevorzugt diese Durchgänge mit einer vorgenannten Aussparung (13) an einem solchen Eckrand.(12) verbinden.

11. Pflaster nach Anspruch 10, **dadurch gekennzeichnet, dass** die Rillen (14) in der Seitenfläche (4A) der Pflastersteine (1), worin die Aussparung (7) vorgesehen ist, angebracht sind und dass diese Rillen in Bezug zu der Oberseite (2) der Pflastersteine (1) schräg gerichtet sind.

12. Pflaster nach einem der vorgenannten Ansprüche, **dadurch gekennzeichnet, dass** die Pflastersteine (1) aus Beton hergestellt sind.

## Revendications

1. Trottoir constitué par des pavés ou des briques (1) qui possèdent une configuration similaire, possédant une surface supérieure (2) qui est conçue pour marcher dessus, une surface inférieure (3) et des surfaces latérales (4A, 4B) s'étendant entre la surface supérieure et la surface inférieure (2-3), **caractérisé en ce que** les pavés (1) sont munis d'au moins une cavité en forme de passage (5) ménagé entre des surfaces latérales opposées (4A), évidement (7) au moins une des surfaces latérales opposées susmentionnées, étant prévu d'un premier de façon à former un conduit (6) qui relie le passage susmentionné (5) à la surface supérieure (2) du pavé (1), et **caractérisé en ce qu'**on prévoit un deuxième évidement (9) dans au moins une des surfaces latérales opposées susmentionnées (4A) de façon à former un conduit (8) qui relie le passage (5) à la surface inférieure (3) du pavé (1), et les pavés (1) du trottoir (11) étant arrangés en une configuration telle que les passages (5) formant des cavités sont substantiellement fermés par des pavés adjacents (1) à une des extrémités éloignées ou aux deux extrémités dans la direction axiale (X-X') des passages.

2. Trottoir selon la revendication 1, **caractérisé en ce que** dans les passages susmentionnés (5) formant des cavités, on prévoit une matière absorbant les liquides ou retenant les liquides, par exemple une matière analogue à une éponge.

3. Trottoir selon la revendication 1 ou 2, **caractérisé en ce que**, dans les passages susmentionnés (5) formant des cavités, on prévoit des moyens qui permettent de décomposer les hydrocarbures.

4. Trottoir selon la revendication 3, **caractérisé ce que** les moyens susmentionnés sont constitués par une suspension de micro-organismes.

5. Trottoir selon l'une quelconque des revendications précédentes, **caractérisé en ce que** les passages (5) des pavés (1), formant des cavités possèdent une largeur (A) qui est inférieure ou égale à la moitié de la largeur (B) des surfaces latérales (4A), sur laquelle s'étendent les passages (5), de telle sorte que, lorsqu'on place plusieurs pavés (1) avec leurs surfaces latérales correspondantes (4A, 4B) les unes à côté des autres, les cavités (5) dans les différents pavés (1) peuvent être séparées l'une de l'autre.

6. Trottoir selon l'une quelconque des revendications précédentes, **caractérisé en ce que** les évidements (7) dans les surfaces latérales (4a) des pavés (1) possèdent une largeur (C) qui est inférieure ou égale à la largeur (A) des passages 5 formant des cavités, de telle sorte que lorsqu'on place différents pavés (1) les uns à côté des autres, on peut former à chaque fois un conduit (6) entre les surfaces latérales des évidements (7) concernés et une surface latérale (4A) d'un pavé voisin.

7. Trottoir selon l'une quelconque des revendications précédentes, **caractérisé en ce que** les pavés (1) sont arrangés les uns à côté des autres en rangées parallèles et de telle sorte que leurs passages (5) sont orientés en direction diagonale par rapport à la direction des rangées, des rangées adjacentes étant décalées l'une par rapport à l'autre, par exemple sur la moitié de la largeur des pavés.

8. Trottoir selon l'une quelconque des revendications 1 à 6, **caractérisé en ce que** les pavés (1) sont arrangés deux par deux les uns contre les autres de telle sorte que leurs passages (5) sont situés dans le prolongement l'un de l'autre, et **en ce que** ces paires de pavés (1) sont mises en quinconce, les passages des paires adjacentes de pavés (1) étant orientés en direction diagonale l'un par rapport à l'autre.

9. Trottoir selon l'une quelconque des revendications précédentes, **caractérisé en ce que** les pavés, à au moins un des bords angulaires (12) ou à proximité d'au moins un des bords angulaires (12) des pavés (1), sont munis d'un évidement (13) sur une certaine hauteur qui, conjointement avec les pavés adjacents (1), forme un petit conduit qui relie la surface du trottoir à un passage formant une cavité, d'un des pavés.

10. Trottoir selon l'une quelconque des revendications précédentes, **caractérisé en ce que** les pavés sont munis de rainures (14) qui relient les passages (5) formant des cavités à un bord angulaire (12) des pavés, et de préférence relient ces passages à un évidement susmentionné (13) audit un bord angulaire (12).

11. Trottoir selon la revendication 10, **caractérisé en ce que** les rainures (14) sont prévues dans la surface latérale (4A) des pavés, dans laquelle on prévoit l'évidement (7), et **en ce que** ces rainures sont orientées en inclinaison par rapport à la surface supérieure 2 des pavés (1).

12. Trottoir selon l'une quelconque des revendications précédentes, **caractérisé en ce que** les pavés (1) sont fabriqués en béton.
